# EUROPEAN PATENT APPLICATION

(11) **EP 4 679 778 A1**
(43) Date of publication of application: **14.01.2026**
(21) Application number: 24306160.3
(22) Date of filing: 10.07.2024
(51) Int. Cl.: H04L 12/413, H04L 25/49, H04L 61/5038

(54) **A NODE FOR A COMMUNICATION BUS SYSTEM**

(71) Applicant: NXP USA, Inc., Austin TX 78735 (US)
(72) Inventor: Beaulaton,, Hugues, 31023 cedex 1 Toulouse (FR); Panis,, Guerric, 31023 cedex 1 Toulouse (FR); Boccardi,, Pierfrancesco Antonio, 5656 AG Eindhoven (NL)
(74) Representative: Schmütz, Christian Klaus Johannes

(57) **Abstract**

A node for a ternary modulation communication bus system, the node comprising: a controller; a receiver configured to detect a ternary modulation state on the communication bus; and a signal driver configured to apply a ternary modulation state to a communication bus, wherein the ternary modulation state comprises one of: a first dominant state; a second dominant state; or a recessive state; wherein, during an enumeration process, the controller is configured to: receive an enumeration signal from the communication bus via the receiver; in response to the enumeration signal, control the signal driver to apply a sequence of ternary modulation states at a respective sequence of timeslots to the communication bus to represent a unique identifier of the node according to an enumeration encoding scheme, wherein the enumeration encoding scheme comprises one or more ternary encoding rules comprising: at each time slot the signal driver only applies the recessive state or a predetermined one of the first dominant state and the second dominant state specific to the time slot.

## Description

### Field

The present disclosure relates to a node for a communication bus system, a communication bus system and a battery management system.

### Background

Some battery management systems use a daisy chain transformer protocol layer (TPL) to communicate. Larger battery cell packs result in increased requirements for the communication system.

### Summary

According to a first aspect of the present disclosure there is provided a node for a ternary modulation communication bus system, the node comprising:
a controller;
a receiver configured to detect a ternary modulation state on the communication bus; and
a signal driver configured to apply a ternary modulation state to a communication bus, wherein the ternary modulation state comprises one of:
   a first dominant state;
   a second dominant state; or
   a recessive state;
wherein, during an enumeration process, the controller is configured to:
   receive an enumeration signal from the communication bus via the receiver;
   in response to the enumeration signal, control the signal driver to apply a sequence of ternary modulation states at a respective sequence of timeslots to the communication bus to represent a unique identifier of the node according to an enumeration encoding scheme,
   wherein the enumeration encoding scheme comprises one or more ternary encoding rules comprising:
      at each time slot the signal driver only applies the recessive state or a predetermined one of the first dominant state and the second dominant state specific to the time slot.

In one or more embodiments, each ternary modulation state may comprise a symbol of the sequence. The rule may comprise that each timeslot / symbol / ternary modulation state of the sequence of ternary modulation states may only have a predetermined one of the first dominant state and the second dominant state. The enumeration encoding scheme may map a first number of symbols to a second number of bits. Each symbol of the first number of symbols may only have a recessive state or a predetermined one of the first dominant state and the second dominant state specific to the symbol.

In one or more embodiments, the one or more ternary encoding rules may comprise: the signal driver applies the same number of first dominant states as second dominant states over the sequence of timeslots.

In one or more embodiments, the one or more ternary encoding rules may comprise one or more of:
an imbalance in the sequence of two first dominant states or two second dominant states is prohibited; and
a temporary imbalance in the sequence of one first dominant state or one second dominant state does not persist for more than three timeslots.

In one or more embodiments, the one or more ternary encoding rules may comprise one or more of:
a maximum run length of the same ternary modulation state at the start of the sequence of ternary modulation states is one timeslot;
a maximum run length of the same ternary modulation state (in particular the recessive state) within the sequence of ternary modulation states is three timeslots; and
a maximum run length of the same ternary modulation state (in particular the recessive state) at the end of the sequence of ternary modulation states is two timeslots.

In one or more embodiments, the signal driver may comprise:
a dominant state driver comprising push-pull drivers configured to selectively:
   push up a first bus connection terminal to a supply voltage and pull-down a second bus connection terminal to a reference voltage to provide the first dominant state; and
   push up the second bus connection terminal to the supply voltage and pull-down the first bus connection terminal to the reference voltage to provide the second dominant state; and
a reference state driver comprising a buffered common mode reference circuit configured to apply the recessive state to the first and second bus connection terminals.

In one or more embodiments, the dominant state driver may be configured to:
selectively enable first state switches and selectively disable second state switches to apply the first dominant state to the communication bus;
selectively enable the second state switches and selectively disable the first state switches to apply the second dominant state to the communication bus; and
selectively disable the first state switches and selectively disable the second state switches to apply the recessive state to the communication bus.

In one or more embodiments, the enumeration encoding scheme may comprise encoding of six three-level symbols to provide three-bit enumeration data.

In one or more embodiments, the enumeration encoding scheme may be defined by a six three-level symbol to three-bit data mapping according to:

| **Enumeration data** | | **Symbol** | | | | | |
|---|---|---|---|---|---|---|---|
| | | [0] | [1] | [2] | [3] | [4] | [5] |
| 0 | 000 | -1 | 1 | -1 | 1 | -1 | 1 |
| 1 | 001 | -1 | 1 | -1 | 1 | 0 | 0 |
| 2 | 010 | -1 | 1 | -1 | 0 | 0 | 1 |
| 3 | 011 | -1 | 1 | 0 | 1 | -1 | 0 |
| 4 | 100 | -1 | 1 | 0 | 0 | -1 | 1 |
| 5 | 101 | -1 | 0 | 0 | 1 | 0 | 0 |
| 6 | 110 | 0 | 1 | -1 | 1 | -1 | 0 |
| 7 | 111 | 0 | 1 | -1 | 0 | -1 | 1 |

; or according to:

| **Enumeration data** | | **Symbol** | | | | | |
|---|---|---|---|---|---|---|---|
| | | [0] | [1] | [2] | [3] | [4] | [5] |
| 0 | 000 | 1 | -1 | 1 | -1 | 1 | -1 |
| 1 | 001 | 1 | -1 | 1 | -1 | 0 | 0 |
| 2 | 010 | 1 | -1 | 1 | 0 | 0 | -1 |
| 3 | 011 | 1 | -1 | 0 | -1 | 1 | 0 |
| 4 | 100 | 1 | -1 | 0 | 0 | 1 | -1 |
| 5 | 101 | 1 | 0 | 0 | -1 | 0 | 0 |
| 6 | 110 | 0 | -1 | 1 | -1 | 1 | 0 |
| 7 | 111 | 0 | -1 | 1 | 0 | 1 | -1 |

In one or more embodiments, the controller may be configured to:
for each timeslot, receive from the receiver, a persistent ternary modulation state that persists on the communication bus for the timeslot;
determine the node to win an arbitration process if, for each timeslot of the sequence of timeslots, the ternary modulation state applied to the communication bus matches the persistent ternary modulation state on the bus for the timeslot; and
determine the node to lose an arbitration process if, for any timeslot of the sequence of timeslots, the ternary modulation state applied to the communication bus differs from the persistent ternary modulation state on the bus for the timeslot.

In one or more embodiments, the receiver may be configured to detect a synchronisation signal on the communication bus to indicate the start of each timeslot.

In one or more embodiments, the controller may be configured to respond to the synchronisation signal by:
waiting for a guard period; and
following the guard period, applying the ternary modulation state of the sequence of ternary modulation states that corresponds to the timeslot, for a transmission period.

In one or more embodiments, the controller may be configured to detect if the ternary modulation state applied to the communication bus matches a persistent ternary modulation state on the bus during a fixed time-window of the transmission period.

According to a second aspect of the present disclosure there is provided a ternary modulation communication bus system comprising:
a master control unit;
a communication bus; and
a plurality of any of the nodes disclosed herein,
wherein the master control unit is configured to apply the enumeration signal to the communication bus.

According to a third aspect of the present disclosure there is provided a battery management system comprising any node or ternary modulation communication bus system disclosed herein.

According to a fourth aspect of the present disclosure, there is provided a method of enumerating a node on a ternary modulation communication bus system, the method comprising:
receiving, at the node, an enumeration signal from a communication bus of the ternary modulation communication bus system;
encoding a sequence of ternary modulation states representing a unique identifier of the node according to an enumeration encoding scheme, wherein each ternary modulation state comprises one of:
   a first dominant state;
   a second dominant state; or
   a recessive state;
applying each ternary modulation state to the communication bus at a respective timeslot of a corresponding sequence of timeslots;
determining the node to win an arbitration process if, for each timeslot of the sequence of timeslots, the ternary modulation state applied to the communication bus matches a persistent ternary modulation state that persists on the bus for the timeslot; and
determining the node to lose an arbitration process if, for any timeslot of the sequence of timeslots, the ternary modulation state applied to the communication bus differs from the persistent ternary modulation state that persists on the bus for the timeslot;
wherein the enumeration encoding scheme comprises one or more ternary encoding rules comprising:
   at each time slot the node only applies the recessive state or a predetermined one of the first dominant state and the second dominant state specific to the time slot.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 illustrates a communication bus system according to an embodiment of the present disclosure;
Figure 2 illustrates a node for the ternary modulation communication bus system according to an embodiment of the present disclosure;
Figures 3A and 3B illustrate circuitry for a signal driver of a node according to an embodiment of the present disclosure;
Figure 3C illustrates 3-level signal with PAM-3 encoding;
Figure 4 illustrates two enumeration encoding schemes for an enumeration process according to an embodiment of the present disclosure;
Figure 5 illustrates an enumeration process according to an embodiment of the present disclosure;
Figure 6 illustrates example signal encoding for providing aligned timeslots according to an embodiment of the present disclosure; and
Figure 7 illustrates a further node according to an embodiment of the present disclosure.

### Detailed Description

Some battery management systems use a daisy-chain TPL protocol to communicate. Traffic on these lines is increasing because of the larger number of cells used (e.g. 800V pack), numerous sensing and EIS timestamps required for synchronization. The communication system may also require a dedicated master controller unit (MCU) core.

A solution is to increase the speed of the TPL by using 3-state pulse amplitude modulation (PAM-3). In this respect, a Fast-TPL (FTPL) has been created allowing for faster communication. However, daisy-chain topology may not always be the best solutions for applications. The present disclosure provides a bus-topology for PAM-3 with an address resolution protocol (enumeration). The address resolution protocol requires an "arbitration" mechanism at the physical layer. The arbitration mechanism applies when several nodes are communicating at the same time on the bus.

Existing arbitration mechanism are based on 2-state communication lines. For instance, the I²C has a strong / dominant low-level driven by the internal pull-down of the nodes, the logic 0. Whereas the weak / recessive high-level is driven by external pull-up, the logic 1. For the CAN bus, the dominant state is when both high and low lines are in their respective high and low voltage level (logical 0). The recessive state is when both lines are at a mid-voltage level (logic 1).

However, FTPL is using a 3-level / 3-state pulse amplitude modulation (PAM-3) and not a binary modulation such as I²C or CAN. The arbitration mechanism of CAN or SMBus (superset of I²C) cannot be transposed to PAM-3. An innovative arbitration solution for a PAM-3 bus is disclosed herein.

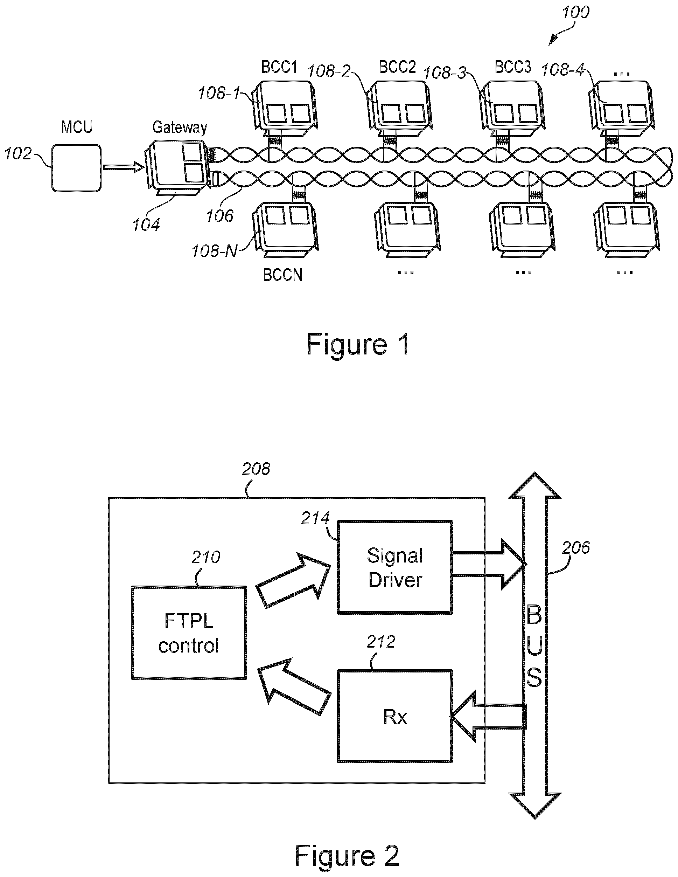

Figure 1 illustrates a communication bus system 100 according to an embodiment of the present disclosure. In this example, the system 100 is a ternary modulated system implementing PAM-3.

The system 100 comprises a master control unit (MCU) 102 connected to a gateway 104. The gateway 104 is connected to a communication bus 106. In this example, the communication bus 106 comprises a twisted pair of wires and each end of each wire is connected to the gateway 104. The system 100 further comprises a plurality of nodes 108-1...108-N, which may be slave nodes. Each node 108-1...108-N may comprise a battery management circuit in a battery management system. Each node 108-1...108-N is distributed along a length of the communication bus 106 and connected to both wires.

All the nodes 108-1...108-N in the bus-topology must be identified by the gateway 104. This identification process is called enumeration or address resolution protocol and is managed by the network layer. The enumeration mechanism may be based on a unique device identifier (UID) of each node 108-1...108-N. In many examples, this UID will have a high bit-count, for example a 48-bit UID. The enumeration process may assign a simpler nodal address (e.g. 3-bit or 6-bit) to each node 108-1...108-N.

The nodal address assigned to a particular node 108-1...108-N during the enumeration process may then be added to the protocol header at data-link layer for subsequent communication between the MCU 102 and the node 108-1 ... 108-N.

Before the enumeration process, when the nodes 108-1...108-N of the bus 106 are not enumerated, each node 108-1...108-N can reply to a broadcast / global command from the MCU 102 / gateway 104. All nodes 108-1...108-N can reply at the same time. If no arbitration is performed at the physical layer, since the system 100 is using PAM-3 modulation, the high, mid and low levels symbols may be superposed and jeopardize the communication. The disclosed nodes, systems and methods implement an arbitration mechanism at the physical layer to avoid this conflict.

Figure 2 illustrates a node 208 for the ternary modulation communication bus system according to an embodiment of the present disclosure.

The node comprises a controller 210, a receiver 212 and a signal driver 214. The receiver 212 is configured to detect a ternary modulation state on the communication bus 106. The signal driver 214 is configured to attempt to apply a ternary modulation state to the communication bus 206. The ternary modulation state comprises one of: a first dominant state (+1); a second dominant state (-1); and a recessive state (0).

A dominant state refers to a state that will dominate over a recessive state if both states are applied to the communication bus 206 by different nodes 208 at the same time. For example, if a first node applies a first dominant state to the bus 206 and a second node applies a recessive state to the bus 206 at the same time, the first dominant state will dominate the recessive state and the first dominant state will persist on the bus 206. In this way, the first node "wins" the communication contest. In this way, an arbitration process is performed at the physical layer to determine which node wins and this arbitration process can be used for the enumeration process as discussed further below.

During an enumeration process, the controller 210 is configured to receive an enumeration signal from the receiver 212 which detects a corresponding enumeration sequence of ternary modulation states on the communication bus 206. This enumeration signal may be applied to the communication bus 206 as a global signal from the MCU / gateway for all nodes to respond to.

In response to the enumeration signal, the controller 210 controls the signal driver 214 to apply a sequence of ternary modulation states to the communication bus 206. The sequence of ternary modulation states represent the UID of the node 208. Each ternary modulation state of the sequence of ternary modulation states may be referred to as a chip or symbol and is applied to the communication bus 206 at a respective timeslot of a sequence of timeslots. The controller 210 controls the signal driver 214 to apply the sequence of ternary modulation states according to an enumeration encoding scheme (the enumeration encoding scheme may also be referred to as an enumeration encoding protocol, an enumeration encoding mapping, an enumeration encoding ruleset or an enumeration encoding conversion). The enumeration encoding scheme comprises a set of ternary encoding rules that avoid a conflict of different dominant states being applied to the communication bus 206 at the same time.

The rules of the enumeration encoding scheme comprise at each time slot, the signal driver can only apply either: (a) a recessive state; or (b) a predefined one of the first dominant state and the second dominant state that is specific to the timeslot. The rules may also comprise that the signal driver applies the same number of first dominant states (chips) as second dominant states (chips) over the sequence of timeslots. The enumeration encoding scheme is discussed in more detail below.

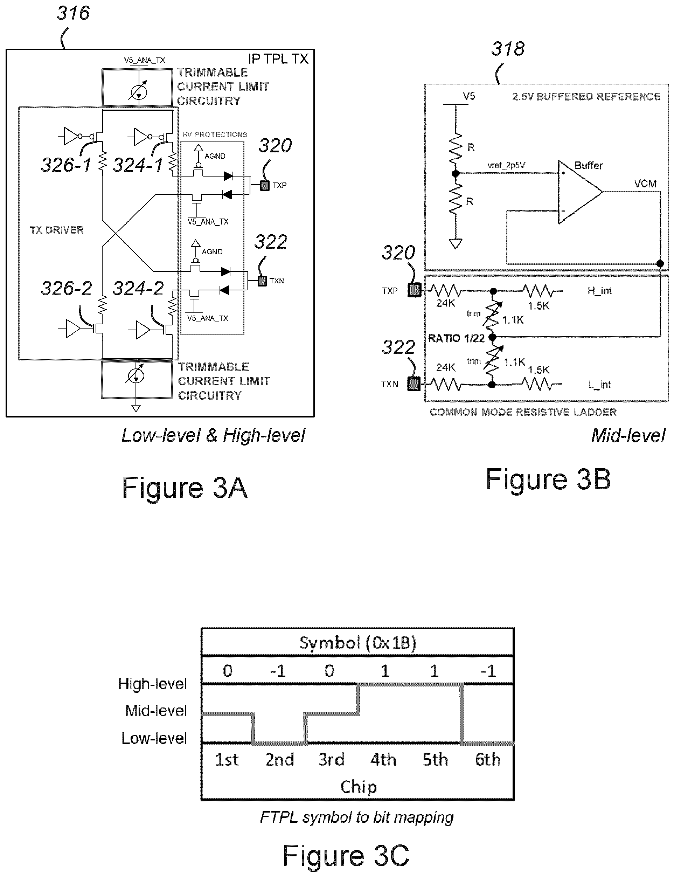

Figures 3A and 3B illustrate circuitry for a signal driver 314 of a node according to an embodiment of the present disclosure.

The circuitry is configured to attempt to apply one of: a first dominant state; a second dominant state; and a recessive state to the communication bus. The resulting 3-level signal with PAM-3 encoding is shown in Figure 3C. The first dominant state is provided as a high-level (voltage) or +1. The second dominant state is provided as a low-level (voltage) or -1. The recessive state is provided as a mid-level (voltage) or 0. Figure 3 illustrates six chips each corresponding to a respective timeslot and comprising a ternary modulation state of +1, -1 or 0.

Returning to Figures 3A and 3B, the circuitry comprises a dominant state driver 316 and a recessive state driver 318. Each of the dominant state driver 316 and the recessive state driver 318 are coupled to: a first bus connection terminal 320 (labelled TXP) that is configured to couple to a first wire of the communication bus; and a second bus connection terminal 322 (labelled TXN) that is configured to couple to a second wire of the communication bus.

The dominant state driver 316 is configured to selectively provide one or neither of the first dominant state and the second dominant state. In this example, the dominant state driver 316 comprises push-pull drivers. The push-pull drivers are configured to either: pull-down the second bus connection terminal 322 to a reference voltage and push-up the first bus connection terminal to a supply voltage; or vice versa.

The dominant state driver comprises a pair of first state switches 324-1, 324-2 and a pair of second state switches 326-1, 326-2.

A first switch 324-1 of the first state switches 324-1, 324-2 is coupled between a supply voltage terminal (labelled V5_ANA_TX) and the first bus connection terminal 320. A second switch 324-2 of the first state switches 324-1, 324-2 is coupled between a reference voltage terminal (e.g. ground) and the second bus connection terminal 322. In this way, the first state switches 324-1, 324-2 can selectively couple the first bus connection terminal 320 to the supply voltage terminal and the second bus connection terminal 322 to the reference voltage terminal, to apply the first dominant state (high-level voltage) across the first and second bus connection terminals 320, 322. The controller may enable the first state switches 324-1, 324-2 to control the signal driver circuit to apply the first dominant state to the communication bus.

A first switch 326-1 of the second state switches 326-1, 326-2 is coupled between the supply voltage terminal and the second bus connection terminal 322. A second switch 326-2 of the first state switches 326-1, 326-2 is coupled between the reference voltage terminal and the first bus connection terminal 320. In this way, the second state switches 326-1, 326-2 can selectively couple the first bus connection terminal 320 to the reference voltage terminal and the second bus connection terminal 322 to the supply voltage terminal, to apply the second dominant state (low-level voltage) across the first and second bus connection terminals 320, 322. The controller may enable the second state switches 326-1, 326-2 to control the signal driver circuit to apply the second dominant state to the communication bus.

The recessive state driver 318 comprises a weak buffered common mode reference circuit based on a resistive ladder. The recessive state driver is configured to attempt to apply the mid-level voltage of the recessive state to both the first bus connection terminal 320 and the second bus connection terminal 322.

The recessive state driver 318 may continuously attempt to apply the mid-level voltage to the first and second bus connection terminals 320, 322. If the dominant state driver 316 is attempting to apply the first dominant state or the second dominant state to the first and second bus connection terminals 320, 322 then the dominant state driver 316 will overpower the weak buffered common mode reference circuit and the dominant state signal level (high or low) will dominate over the recessive state signal level (mid). Therefore, the controller may control the signal driver circuit to attempt to apply the recessive state to the communication bus by disabling both the first state switches 324-1, 324-2 and the second state switches 326-1, 326-2 of the dominant state driver 316. In this way, the dominant state driver will not attempt to apply either of the first or second dominant states, allowing the recessive state driver 318 to attempt to apply the recessive state to the communication bus via the bus connection terminals 320, 322.

The dominance of the dominant state driver 316 over the recessive state driver 318 applies both within a single node and between nodes on the communication bus. For example, if a first node is applying the first or second dominant mode (using the dominant driver circuit) this first dominant mode will dominate the recessive state drivers of any nodes attempting to apply the recessive state to the communication bus. As a result, the dominant state dominates the recessive state and persists on the bus (becomes a persistent ternary modulation state for the current timeslot), as desired for an arbitration process.

The ability of the signal driver to provide one of a first dominant mode, second dominant mode or recessive mode to the communication bus allows for arbitration during the enumeration process. However, a conflict between the first and second dominant modes on the communication bus should be avoided.

Inspection of the dominant driver circuit 316 illustrates the potential conflict if different nodes on the communication bus attempt to apply different ones of the first and second dominant states on the bus. For example if a first node attempts to apply the first dominant state to the communication bus and a second node attempts to apply the second dominant state to the communication bus, current can flow from the supply voltage terminal of the first node to the first communication bus terminal 320 of the first node to the first communication bus terminal 320 of the second node and to the reference terminal of the second node. This will draw a large amount of current and potentially damage the integrated circuits. Therefore, this conflict of dominant states should be avoided.

Returning to Figure 2, as noted above, the controller 210 controls the signal driver 214 to apply a sequence of ternary modulation states at a respective sequence of timeslots to the communication bus 206 to represent the UID of the node according to an enumeration encoding scheme. The enumeration encoding scheme prevents conflicts of the first and second dominant states on the communication bus 206.

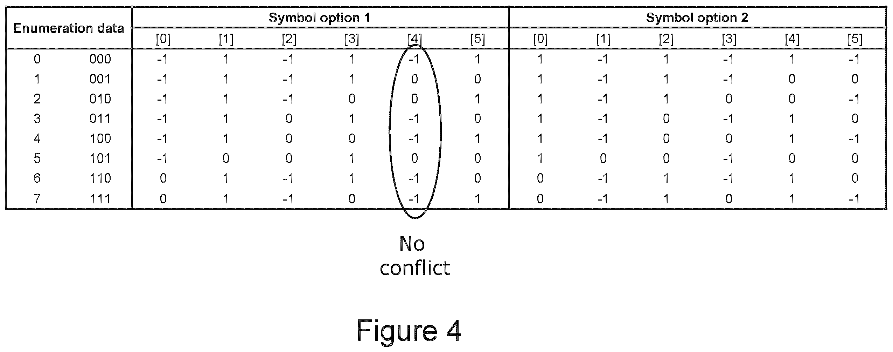

Figure 4 illustrates an example enumeration encoding scheme for an enumeration encoding process according to an embodiment of the present disclosure. The encoding scheme is illustrated as a table. The encoding scheme comprises the encoding of 6 chips (symbols), having 3-levels, to provide 3-bit enumeration data. The first dominant state is represented as +1, the second dominant state is represented as -1 and the recessive state is represented as 0.

The enumeration encoding scheme includes one or more ternary encoding rules. The table illustrates two different enumeration encoding schemes that satisfy the ternary encoding rules. The enumeration encoding scheme enables multiple nodes to attempt to apply a ternary modulation state to the communication bus at the same time (during an enumeration and arbitration process) without the risk of a dominant state conflict.

The enumeration encoding scheme includes one or more ternary encoding rules comprising:
(i) At each time slot, the signal driver can only apply either: (a) a recessive state; or (b) a predefined one of the first dominant state and the second dominant state that is specific to the timeslot. In other words, different nodes cannot apply different dominant states to the communication bus in the same time slot. This rule can be seen in Figure 4 in that each column only contains a +1 or a -1 but not both. Only one from the two duets {-1,0} and {0,1} is possible per chip / timeslot.
(ii) The signal driver should apply the same number of first dominant states as second dominant states over the sequence of timeslots. In other words, the sequence of ternary modulation states must be balanced. This can reduce unwanted capacitance in the driver circuits. This rule can be seen in Figure 4 in that each row of six symbols sums to zero.
(iii) An imbalance of dominant states does not exceed ±1. In other words, when a chip in a sequence comprises a first dominant state, a further first dominant state is forbidden at subsequent timeslots until after a timeslot comprising a second dominant state. In other words, dominant states in the sequence must alternate between the first dominant state and the second dominant states (although recessive states are permitted in between).
(iv) A temporary imbalance in the sequence of a first or second dominant state without a subsequent other one of the first or second dominant state (i.e. a temporary imbalance of ±1 (and the associated capacitance) persisting in the sequence) must not persist for more than 3 chips. This rule can be seen in the table of Figure 4 in that a temporary imbalance of -1 persists for the first three chips of 101 for symbol option 1.
(v) The maximum run length at the beginning of the sequence shall be 1. In other words, the second chip of the sequence is different to the first chip of the sequence. This can be seen in Figure 4 in that the second chip [1] is always different to the first chip [0].
(vi) The maximum internal run length within a sequence shall be 3. In other words, a sequence cannot include more than three consecutive chips with an identical state. This may include concatenation of sequences. For example, a 001 followed by a 110 would have a sequence of three recessive states (chips [4] & [5] of 001 and chip [1] of 110).
(vii) The maximum run length at the end of the sequence shall be 2. In other words, a sequence cannot include more than two consecutive chips with an identical state at the end of the sequence (chips [3], [4] and [5] in Figure 4 cannot be identical).

In the above rules, an ***imbalance*** refers to the running total of modulation states in the sequence. A ***run length*** refers to consecutive modulation states of the same type in the sequence. For example, a sequence with successive chips of -1, 0, 0 would have an imbalance of -1 for three chips/timeslots and a run length of 1 for the second dominant state and a run length of two for the recessive state.

During an enumeration process, each node on the communication bus can encode their UID according to the enumeration encoding scheme. Each node can then at the same time attempt to apply the sequence of ternary modulation states that represent their UID to the communication bus. The provision of two dominant states and a recessive state provides for an arbitration process at the physical layer such that each node can be enumerated in turn according to an increasing order of UID. In other words, the node with the lowest value UID wins the arbitration process. This can be seen in Figure 4 in that the lower enumerated bit values contain more dominant states.

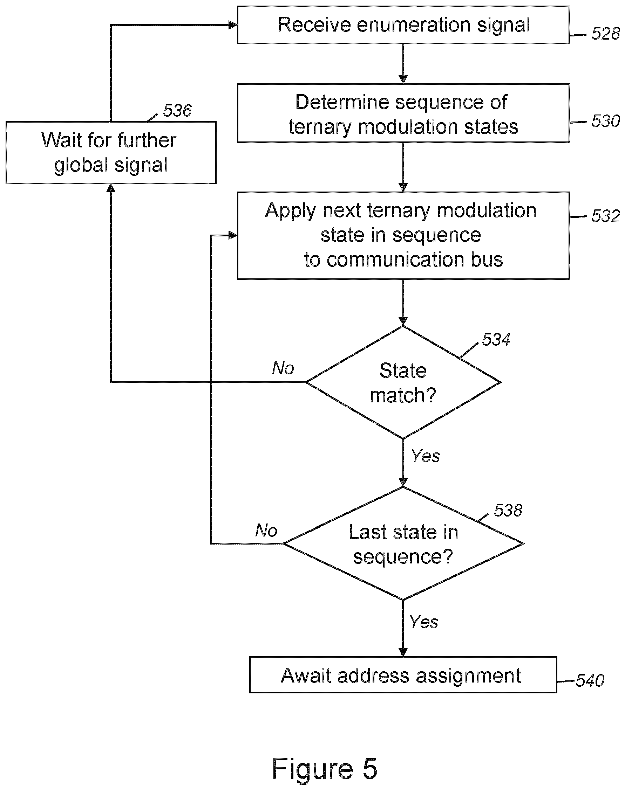

Figure 5 illustrates an enumeration process according to an embodiment of the present disclosure. The process may be performed by any node or communication bus system disclosed herein. The process will be described with continuing reference to Figure 4.

At a first step 528, all nodes connected to the bus may be in a listen only mode. Each node connected to the communication bus receives an enumeration signal from the communication bus. A MCU may assert the enumeration signal (e.g. via a gateway) on the communication bus as a global signal to all nodes that the enumeration process will start. The enumeration signal may comprise a start enumeration command instructing all nodes to clear their nodal addresses (if any). This may set the nodal address of each node to 0. The enumeration signal may comprise a return UID command instructing all nodes connected to the bus to return their UID.

At a second step 530 the node encodes a sequence of ternary modulation states representative of the UID of the node according to the enumeration encoding scheme. Each ternary modulation state comprises one of: a first dominant state; a second dominant state; or a recessive state.

The enumeration encoding scheme comprises one or more ternary encoding rules as described above including: at each time slot of a sequence of timeslots corresponding to the respective sequence of ternary modulation states, the node may only apply: (i) the recessive state; or (ii) a predetermined one of the first dominant state and the second dominant state specific to the time slot, to the communication bus.

At a third step 532, during a first timeslot, the node applies the first ternary modulation state of the sequence of ternary modulation states to the communication bus.

At a fourth decision step 534, the node detects a persistent ternary modulation state that persists on the communication bus during the first timeslot and determines if the first ternary modulation state that the node applied to the communication bus matches the persistent ternary modulation state.

The states will not match when the node attempts to apply a recessive state to the bus and instead a dominant state persists on the bus. In this way, the node has lost the arbitration process to another node on the bus, indicating that it will not be assigned an address at this time. If the states do not match, the method proceeds to fifth step 536 and the node awaits a further global signal on the bus that indicates that another phase of the enumeration process will commence (i.e. the assignment of a nodal address to another node).

If the states do match, then the method proceeds to sixth decision step 538 and determines if the current ternary modulation state is the last ternary modulation state in the sequence of ternary modulation states. During the first timeslot, this will not be the case and the node returns to step 532 to apply the next ternary modulation state in the sequence to the bus.

If the ternary modulation state applied to the bus continues to match the persistent modulation state for the entire sequence of ternary modulation states, then the node has won the arbitration process and will be assigned a nodal address by the MCU. The method then proceeds to step 540 and awaits a nodal address assignment from the MCU.

The entire process is then repeated for all un-enumerated nodes (those without a nodal address) until all nodes on the bus have been assigned a nodal address. Following the enumeration process and assignment of all nodal addresses, the MCU can then address individual nodes on the bus by including the simple nodal address in a header field. As a result, nodes will not respond at the same time and the risk of collision of different dominant states is reduced. Therefore, following the enumeration process, the MCU and each node may switch to a standard ternary encoding scheme that has a higher bit rate, for example a six three-level symbol to six-bit encoding scheme.

With reference to the encoding scheme of Figure 4, we can consider the process of Figure 5 with two different nodes attached to the bus. For simplicity, it will be assumed that the UID of a first node is 010 (third row of table) and the UID of a second node is 100 (fifth row of table) and that symbol option 1 is used. In reality, the UID will be a much higher value such as a 48-bit ID, that can be encoded by concatenation (and optionally padding) of the three-bit codes and their corresponding sequences of six symbols of Figure 4.

Jumping to step 532, in the first timeslot, both the first node and the second node will apply the first symbol (labelled [0]) corresponding to their enumerated UID. Both the first node and the second node will apply the second dominant state, -1, to the communication bus. This second dominant state will persist on the bus leading to a positive outcome of the matching check at step 534 for both the first and second node. The process will proceed through step 538 and back to step 532 to apply the next symbol (symbol [1]). Both the first and second node will apply the first dominant state, +1, to the bus leading to a positive match at step 534 for both nodes and a further loop back to step 532. On the next pass at step 532, the first and second nodes will apply the next symbol (symbol [2]). The first node will apply the second dominant state, -1, to the bus and the second node will attempt to apply the recessive state, 0. The second dominant state will dominate the recessive state and the second dominant state will persist on the bus (the persistent ternary modulation state). Therefore, the first node will determine a positive match at step 534 and continue to step 538 and loop back to step 532. However, the second node will determine a mismatch at step 534 and proceed to step 536 and await a further global signal from on the bus. The first node will proceed through the remaining symbols in its sequence of ternary modulation states and continue to have successful matching at step 534. When the first node completes step 534 for the last symbol (symbol [5]) the determination at step 538 will be positive and the node will proceed to step 540 and receive a nodal address assignment from the MCU / bus, e.g. address 001. The first node will then no longer partake in the enumeration process and may await a further global signal indicating that the enumeration process is complete or await a specifically nodal addressed signal from the MCU.

The entire process will then be repeated with only the second node. As the second node is the only remaining node to be enumerated it will automatically determine a positive matching outcome at step 534 for every symbol and eventually proceed to step 540 and receive a nodal address assignment, e.g. address 002.

More generally, the process is repeated until each node connected to the bus has been assigned a nodal address. This is because the MCU may not initially know how many nodes are connected to the bus. Following the enumeration process, the MCU knows how many nodes are connected to the bus and the UID and nodal address of each node.

After each nodal address is assigned, the MCU may request each node to return their nodal address using the enumeration encoding scheme. If any nodal addresses are un-enumerated, their nodal address of 0 will win the arbitration process (see row one of table in Figure 4) and the MCU knows to run a further nodal address assignment loop (the process of Figure 5). If a non-zero address wins the arbitration, the MCU knows that all nodes have been assigned a nodal address.

All nodes must respond synchronously to ensure that the timeslots of each node are aligned. In other words, the nodes all respond with their first symbol, second symbol, nth symbol during the same respective timeslot.

In some examples, the communication bus system may have a master clock that ensures this alignment of timeslots. In other examples, each node may have its own clock. In such examples the MCU may use a synchronisation signal to ensure alignment of timeslots.

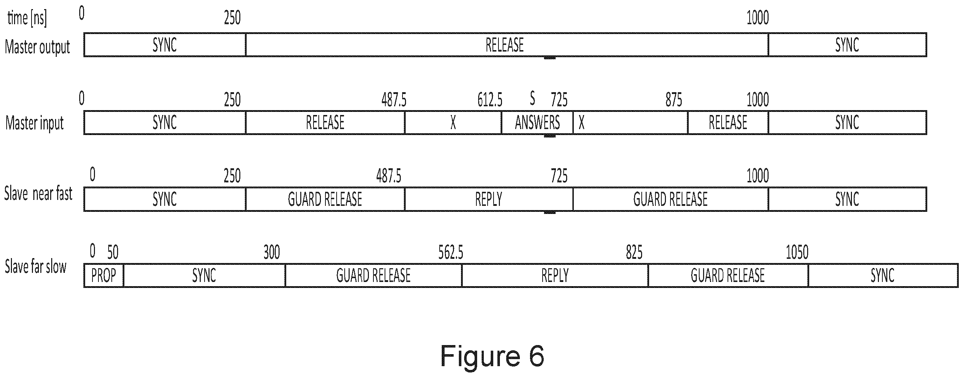

Figure 6 illustrates example signal encoding for providing aligned timeslots according to an embodiment of the present disclosure.

All nodes on the bus are running on their own clock with a variability of ±5%. In this example, to provide for aligned timeslots, the nodes send their PAM-3 signaling within a specific time-window that is surrounded by two guard release periods and triggered by a master synchronization signal.

In this example, a timeslot corresponds to 1000 ns. The Figure illustrates:
1. The output from a MCU or gateway (labelled "Master Output");
2. The received input at the MCU or gateway (labelled "Master Input");
3. The response of a first node positioned close to the MCU on the bus (minimal propagation distance) with a fast clock (+5%) (labelled "Slave near fast"); and
4. The response of a second node positioned far from the MCU on the bus (maximum propagation distance) with a slow clock (-5%) (labelled "Slave far slow");

The first node and the second node are illustrative of the worst-case conditions - a first node with a fast clock and positioned close to the MCU combined with a second node with a slow clock and positioned far from the MCU.

At the start of the timeslot, the MCU asserts a synchronisation signal for 250 ns on the bus to signal the start of the timeslot. Each slave node is configured to respond to the synchronisation signal with a 250 ns guard period (guard release) in which the node does not apply any modulation state to the bus. The guard period is followed by a 250 ns transmission period in which the node asserts the ternary modulation state (symbol) corresponding to the current timeslot. The transmission period is followed by a further 250 ns guard release.

Due to the negligible propagation distance and the 5% fast clock of the first node, the first node begins signal transmission (start of transmission period) of the symbol early at 487.5 ns (instead of 500 ns if clock was accurate). Due to the negligible propagation distance the MCU receives the signal from the first node at 487.5 ns. Due to the fast clock, the first node completes the signal transmission (end of transmission period) at 725 ns and the master output receives the signal from the first node at 725 ns.

In contrast, due to a propagation delay of 50ns, the second node only receives the end of the synchronisation signal at 300 ns. The slow clock compounds the delay and the second node only begins signal transmission at 562.5 ns and completes signal transmission at 825 ns. The 50 ns propagation delay also applies for the signal returning to the MCU. Therefore, the MCU receives the signal from the second node at times 612.5 ns and 875 ns.

The MCU receives signals from both the first node and the second node in a fixed time window from 612.5 ns (starts receiving signal from second node) and 725 ns (stops receiving signal from first node). As the first node and the second node represent extreme worst-case scenarios, the fixed time-window from 612.5-725 ns represents a time-window within the transmission period when signals will be received from all nodes on the bus and the enumeration and arbitration process can take place. In this example, the best sampling time is at 669 ns in this example. Other examples may use different durations of timeslots, synchronisation signals, guard periods, transmission periods and/or transmission windows.

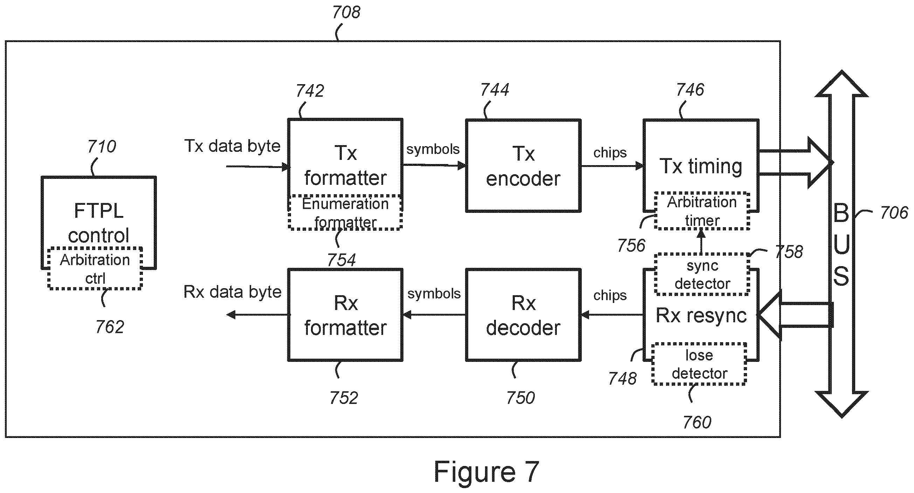

Figure 7 illustrates a further node according to an embodiment of the present disclosure. Features of Figure 7 also included in Figure 2 have been given corresponding numbers in the 700 series and will not necessarily be described again here.

The node 708 includes a controller 710, a transmission formatter 742, a transmission encoder 744, a transmission timer 746, a receiver resync 748, a receiver decoder 750 and a receiver formatter 752. It will be appreciated that each of these modules and/or their functionality may form part of the controller, the signal driver and/or the receiver of Figure 2, as appropriate.

New functionality required for the three-level enumeration process are shown in dashed outline.

The transmission formatter 742 is configured to receive bytes of data from the controller 710 and determine a FTPL code - a sequence of ternary modulation states (symbols) - according to a ternary encoding scheme. During the enumeration process, the transmission formatter 742 uses an enumeration formatter 754 to apply the enumeration encoding scheme such as the six three-level symbol to three-bit scheme described above. The enumeration scheme determines the sequence of ternary modulation states that represent the UID received from the controller 710. Following the enumeration process, the transmission formatter 742 may use a standard ternary encoding scheme (e.g. six three-level symbol to six-bit scheme) to determine the FTPL code for data bytes received from the controller 710.

The transmission encoder 744 encodes the bit stream determines by the transmission formatter 742 to a stream of ternary modulation states.

The transmission timer 746 includes an arbitration timer 756 configured to receive a synchronisation signal from a sync detector 758 of the receiver resync 748 and add the guard period in response to synchronisation signal. The transmission timer 746 will control the signal driver to apply the ternary modulation state to the bus 706 for a particular timeslot following the end of the guard period.

The sync detector 758 detects the synchronisation signal of each timeslot on the communication bus 706 and provides the synchronisation signal to the arbitration timer 756.

The receiver resync 748 also includes a loss detector 760 to detect if a persistent ternary modulation state on the bus matches the ternary modulation state applied by the signal driver of the node 708. The loss detector 760 may detect the match during a fixed time-window within the transmission period as described above in relation to Figure 6.

The receive decoder 750 and the receive formatter 752 convert the ternary modulation states (symbols) detected on the bus 706 back to data for the controller 710. The controller 710 includes an arbitration control 762 to detect if the node has lost the arbitration process (or not) for the current nodal address assignment phase of the enumeration process.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A node for a ternary modulation communication bus system, the node comprising:
a controller;
a receiver configured to detect a ternary modulation state on the communication bus; and
a signal driver configured to apply a ternary modulation state to a communication bus, wherein the ternary modulation state comprises one of:
a first dominant state;
a second dominant state; or
a recessive state;
wherein, during an enumeration process, the controller is configured to:
receive an enumeration signal from the communication bus via the receiver;
in response to the enumeration signal, control the signal driver to apply a sequence of ternary modulation states at a respective sequence of timeslots to the communication bus to represent a unique identifier of the node according to an enumeration encoding scheme,
wherein the enumeration encoding scheme comprises one or more ternary encoding rules comprising:
at each time slot the signal driver only applies the recessive state or a predetermined one of the first dominant state and the second dominant state specific to the time slot.

2. The node of claim 1, wherein the one or more ternary encoding rules comprise:
the signal driver applies the same number of first dominant states as second dominant states over the sequence of timeslots.

3. The node of claim 1 or claim 2, wherein the one or more ternary encoding rules comprise one or more of:
an imbalance in the sequence of two first dominant states or two second dominant states is prohibited; and
a temporary imbalance in the sequence of one first dominant state or one second dominant state does not persist for more than three timeslots.

4. The node of any preceding claim, wherein the one or more ternary encoding rules comprise one or more of:
a maximum run length of the same ternary modulation state at the start of the sequence of ternary modulation states is one timeslot;
a maximum run length of the same ternary modulation state within the sequence of ternary modulation states is three timeslots; and
a maximum run length of the same ternary modulation state at the end of the sequence of ternary modulation states is two timeslots.

5. The node of any preceding claim, wherein the signal driver comprises:
a dominant state driver comprising push-pull drivers configured to selectively:
push up a first bus connection terminal to a supply voltage and pull-down a second bus connection terminal to a reference voltage to provide the first dominant state; and
push up the second bus connection terminal to the supply voltage and pull-down the first bus connection terminal to the reference voltage to provide the second dominant state; and
a reference state driver comprising a buffered common mode reference circuit configured to apply the recessive state to the first and second bus connection terminals.

6. The node of claim 5, wherein the dominant state driver is configured to:
selectively enable first state switches and selectively disable second state switches to apply the first dominant state to the communication bus;
selectively enable the second state switches and selectively disable the first state switches to apply the second dominant state to the communication bus; and
selectively disable the first state switches and selectively disable the second state switches to apply the recessive state to the communication bus.

7. The node of any preceding claim, wherein the enumeration encoding scheme comprises encoding of six three-level symbols to provide three-bit enumeration data.

8. The node of any preceding claim, wherein the enumeration encoding scheme is defined by a six three-level symbol to three-bit data mapping according to:
| **Enumeration data** | | **Symbol** | | | | | |
|---|---|---|---|---|---|---|---|
| | | [0] | [1] | [2] | [3] | [4] | [5] |
| 0 | 000 | -1 | 1 | -1 | 1 | -1 | 1 |
| 1 | 001 | -1 | 1 | -1 | 1 | 0 | 0 |
| 2 | 010 | -1 | 1 | -1 | 0 | 0 | 1 |
| 3 | 011 | -1 | 1 | 0 | 1 | -1 | 0 |
| 4 | 100 | -1 | 1 | 0 | 0 | -1 | 1 |
| 5 | 101 | -1 | 0 | 0 | 1 | 0 | 0 |
| 6 | 110 | 0 | 1 | -1 | 1 | -1 | 0 |
| 7 | 111 | 0 | 1 | -1 | 0 | -1 | 1 |
; or according to:
| **Enumeration data** | | **Symbol** | | | | | |
|---|---|---|---|---|---|---|---|
| | | [0] | [1] | [2] | [3] | [4] | [5] |
| 0 | 000 | 1 | -1 | 1 | -1 | 1 | -1 |
| 1 | 001 | 1 | -1 | 1 | -1 | 0 | 0 |
| 2 | 010 | 1 | -1 | 1 | 0 | 0 | -1 |
| 3 | 011 | 1 | -1 | 0 | -1 | 1 | 0 |
| 4 | 100 | 1 | -1 | 0 | 0 | 1 | -1 |
| 5 | 101 | 1 | 0 | 0 | -1 | 0 | 0 |
| 6 | 110 | 0 | -1 | 1 | -1 | 1 | 0 |
| 7 | 111 | 0 | -1 | 1 | 0 | 1 | -1 |

9. The node of any preceding claim, wherein the controller is configured to:
for each timeslot, receive from the receiver, a persistent ternary modulation state that persists on the communication bus for the timeslot;
determine the node to win an arbitration process if, for each timeslot of the sequence of timeslots, the ternary modulation state applied to the communication bus matches the persistent ternary modulation state on the bus for the timeslot; and
determine the node to lose an arbitration process if, for any timeslot of the sequence of timeslots, the ternary modulation state applied to the communication bus differs from the persistent ternary modulation state on the bus for the timeslot.

10. The node of any preceding claim, wherein the receiver is configured to detect a synchronisation signal on the communication bus to indicate the start of each timeslot.

11. The node of claim 10, wherein the controller is configured to respond to the synchronisation signal by:
waiting for a guard period; and
following the guard period, applying the ternary modulation state of the sequence of ternary modulation states that corresponds to the timeslot, for a transmission period.

12. The node of claim 11, wherein the controller is configured to detect if the ternary modulation state applied to the communication bus matches a persistent ternary modulation state on the bus during a fixed time-window of the transmission period.

13. A ternary modulation communication bus system comprising:
a master control unit;
a communication bus; and
a plurality of nodes according to any preceding claim,
wherein the master control unit is configured to apply the enumeration signal to the communication bus.

14. A battery management system comprising the node of any of claims 1 to 12 or the ternary modulation communication bus system of claim 13.

15. A method of enumerating a node on a ternary modulation communication bus system, the method comprising:
receiving, at the node, an enumeration signal from a communication bus of the ternary modulation communication bus system;
encoding a sequence of ternary modulation states representing a unique identifier of the node according to an enumeration encoding scheme, wherein each ternary modulation state comprises one of:
a first dominant state;
a second dominant state; or
a recessive state;
applying each ternary modulation state to the communication bus at a respective timeslot of a corresponding sequence of timeslots;
determining the node to win an arbitration process if, for each timeslot of the sequence of timeslots, the ternary modulation state applied to the communication bus matches a persistent ternary modulation state that persists on the bus for the timeslot; and
determining the node to lose an arbitration process if, for any timeslot of the sequence of timeslots, the ternary modulation state applied to the communication bus differs from the persistent ternary modulation state that persists on the bus for the timeslot;
wherein the enumeration encoding scheme comprises one or more ternary encoding rules comprising:
at each time slot the node only applies the recessive state or a predetermined one of the first dominant state and the second dominant state specific to the time slot.
